# EUROPEAN PATENT APPLICATION

(11) **EP 4 811 072 A1**
(43) Date of publication of application: **23.09.2026**
(21) Application number: 24910716.0
(22) Date of filing: 11.12.2024
(51) Int. Cl.: G05D 23/20

(54) **TEMPERATURE CONTROL METHOD AND TEMPERATURE CONTROL SYSTEM FOR VALVE**

(30) Priority: 26.12.2023 CN 202311812693
(71) Applicant: Beijing Aurasky Electronics Co., Ltd., Beijing 100176 (CN)
(72) Inventor: LI, Zelu, Beijing 100176 (CN); ZHANG, Haiyang, Beijing 100176 (CN); ZHENG, Wenning, Beijing 100176 (CN); LI, Chunyu, Beijing 100176 (CN); GENG, Zhen, Beijing 100176 (CN)
(74) Representative: Cohausz & Florack
(86) International application number: PCT/CN2024/138378
(87) International publication number: WO 2025/139785

(57) **Abstract**

There are provided a temperature control method and a temperature control system for a valve. The temperature control method includes: determining a temperature error based on a current temperature and a target temperature of a valve (S1); determining a target voltage based on the temperature error (S2);determining whether a current voltage of a heating device is consistent with the target voltage, and in response to the current voltage of the heating device being not consistent with the target voltage, controlling a voltage adjusting module based on the target voltage to adjust the voltage of the heating device to obtain an adjusted voltage (S3); and updating the adjusted voltage to be a new current voltage of the heating device, and returning to the operation of determining whether the current voltage of the heating device is consistent with the target voltage (S4).

## Description

### TECHNICAL FIELD

The present disclosure relates to the field of semiconductor manufacturing, and in particular, to a temperature control method and a temperature control system for a valve.

### BACKGROUND

Currently, in the field of semiconductor apparatus manufacturing, temperature is an important parameter which affects processing results of apparatuses. Temperature control is needed for many parts of a semiconductor apparatus, so a temperature controller is a widely used part in the semiconductor apparatus. The mostly commonly used temperature control solution for existing valve products is heating a valve body with a heating rod, and performing temperature measurement with a thermocouple to achieve on-off closed-loop temperature control.

With development of existing technology and increase of iteration speed of chip manufacturing processes in the semiconductor industry, process requirements for temperature control accuracy of an interior of a reaction chamber and related valve products are continuously increasing.

Therefore, how to improve the temperature control accuracy is an urgent technical problem to be solved by those of ordinary skill in the art.

### SUMMARY

For solving at least one of the technical problems in the existing technology, the present disclosure provides a temperature control method and a temperature control system for a valve, which improve temperature control accuracy by controlling a temperature by dual closed loop of temperature and voltage.

In order to achieve the objective of the present disclosure, there is provided a temperature control method for a valve, including:
determining a temperature error based on a current temperature and a target temperature of a valve;
determining a target voltage based on the temperature error;
determining whether a current voltage of a heating device is consistent with the target voltage, and in response to the current voltage of the heating device being not consistent with the target voltage, controlling a voltage adjusting module based on the target voltage to adjust the voltage of the heating device to obtain an adjusted voltage; and
updating the adjusted voltage to be a new current voltage of the heating device, and returning to the operation of determining whether the current voltage of the heating device is consistent with the target voltage.

In some embodiments, determining the target voltage based on the temperature error includes:
determining the target voltage based on the temperature error by using a first proportional-integral-derivative model; and/or
controlling the voltage adjusting module based on the target voltage to adjust the voltage of the heating device to obtain the adjusted voltage includes:
   determining a voltage adjustment parameter based on the target voltage by using a second proportional-integral-derivative model; and
   controlling the voltage adjusting module based on the voltage adjustment parameter to adjust the voltage of the heating device to obtain the adjusted voltage.

In some embodiments, determining the target voltage based on the temperature error further includes:
determining an adjustment parameter corresponding to an error range to which the temperature error belongs, the adjustment parameter including at least one of a proportional gain, an integral gain, or a derivative gain;
updating the first proportional-integral-derivative model based on the adjustment parameter; and
determining the target voltage corresponding to the error range based on the temperature error and the updated first proportional-integral-derivative model.

In some embodiments, two error ranges are provided and are a first error range and a second error range, and each temperature error belonging to the second error range is greater than temperature errors belonging to the first error range; and
determining the adjustment parameter corresponding to the error range to which the temperature error belongs includes:
in a case where the temperature error belongs to the second error range, determining that the adjustment parameter includes the proportional gain and the derivative gain; and
in a case where the temperature error belongs to the first error range, determining that the adjustment parameter includes the integral gain.

In some embodiments, the voltage adjusting module includes a thyristor, and the voltage adjustment parameter is a duty cycle of a control signal for the thyristor.

In some embodiments, the valve is provided with a heating rod and a temperature sensor, the temperature sensor includes a first temperature sensor, a second temperature sensor, and a third temperature sensor, the first temperature sensor, the second temperature sensor, and the third temperature sensor are disposed around a valve port of the valve on an outer surface of the valve, the second temperature sensor and the third temperature sensor correspond to two ends of the heating rod respectively, and the first temperature sensor is located on a side of the valve port away from the heating rod; and
before determining the temperature error based on the current temperature and the target temperature of the valve, the temperature control method further includes:
acquiring a measured temperature of the first temperature sensor, a measured temperature of the second temperature sensor, and a measured temperature of the third temperature sensor;
taking an average of the measured temperature of the second temperature sensor and the measured temperature of the third temperature sensor as a first average temperature; and
taking an average of the measured temperature of the first temperature sensor and the first average temperature as the current temperature.

The present disclosure further provides a temperature control system, including a temperature sensor, a heating device, and a control device, wherein the temperature sensor is configured to measure a current temperature of a valve, the temperature sensor and the heating device are both electrically connected to the control device, and the control device adopts any of the above temperature control methods to control the heating device to adjust a temperature of the valve.

In some embodiments, the heating device is a heating rod, the temperature sensor includes a first temperature sensor, a second temperature sensor, and a third temperature sensor, the temperature sensor is disposed around a valve port of the valve on an outer surface of the valve, the second temperature sensor and the third temperature sensor correspond to two ends of the heating rod respectively, and the first temperature sensor is located on a side of the valve port away from the heating rod.

In some embodiments, the temperature sensor includes a thermocouple and four connection terminals, wherein a first connection terminal and a second connection terminal in the four connection terminals are connected to one end of the thermocouple, a third connection terminal and a fourth connection terminal in the four connection terminals are connected to the other end of the thermocouple, the first connection terminal is configured to be connected to a current source, the second connection terminal and the third connection terminal are configured to be connected to two ends of a voltage measuring mechanism respectively, and the fourth connection terminal is grounded.

In some embodiments, the second connection terminal is connected to a first filter resistor and a first filter capacitor, a first terminal of the first filter resistor is connected to the second connection terminal, a second terminal of the first filter resistor is connected to a first terminal of the first filter capacitor, and a second terminal of the first filter capacitor is grounded, and/or
the third connection terminal is connected to a second filter resistor and a second filter capacitor, a first terminal of the second filter resistor is connected to the third connection terminal, a second terminal of the second filter resistor is connected to a first terminal of the second filter capacitor, and a second terminal of the second filter capacitor is grounded.

In some embodiments, a third filter capacitor is further disposed between the second connection terminal and the third connection terminal for filtering out differential-mode signals between the second connection terminal and the third connection terminal.

The present disclosure has the following beneficial effects.

The temperature control method for a valve provided in the present disclosure includes: determining the temperature error based on the current temperature and the target temperature of the valve; determining the target voltage based on the temperature error; determining whether the current voltage of the heating device is consistent with the target voltage, and in response to the current voltage of the heating device being not consistent with the target voltage, controlling the voltage adjusting module based on the target voltage to adjust the voltage of the heating device to obtain the adjusted voltage; and updating the adjusted voltage to be the new current voltage of the heating device, and returning to the operation of determining whether the current voltage of the heating device is consistent with the target voltage. In the temperature control method for a valve provided in the present disclosure, by controlling the voltage adjusting module based on the temperature error between the current temperature and the target temperature to adjust the voltage of the heating device, the voltage of the heating device can be brought close to the target voltage, and the temperature of the valve can be further brought close to the target temperature, thereby achieving closed-loop control of the temperature of the valve. After the voltage adjusting module is controlled to adjust the voltage of the heating device, the adjusted voltage can be updated to be the new current voltage of the heating device, and it is determined again whether the new current voltage is consistent with the target voltage, thereby achieving closed-loop control of the voltage of the heating device. The temperature control method provided in the present disclosure adds voltage closed-loop control based on temperature closed-loop control, and the dual closed-loop control method achieves accurate control of the heating device, thereby improving temperature control accuracy.

The present disclosure further provides a temperature control system, which adopts the above control method to control a heating device, and has the above advantages.

### BRIEF DESCRIPTION OF DRAWINGS

FIG. 1 is a flowchart illustrating a temperature control method for a valve according to an implementation of the present disclosure;
FIG. 2 is a flowchart illustrating a temperature control method for a valve according to an implementation of the present disclosure;
FIG. 3 shows a response curve during an adjustment process;
FIG. 4 is a schematic structural diagram of a temperature sensor in a temperature control system according to an implementation of the present disclosure; and
FIG. 5 is a schematic structural diagram of a valve according to an implementation of the present disclosure.

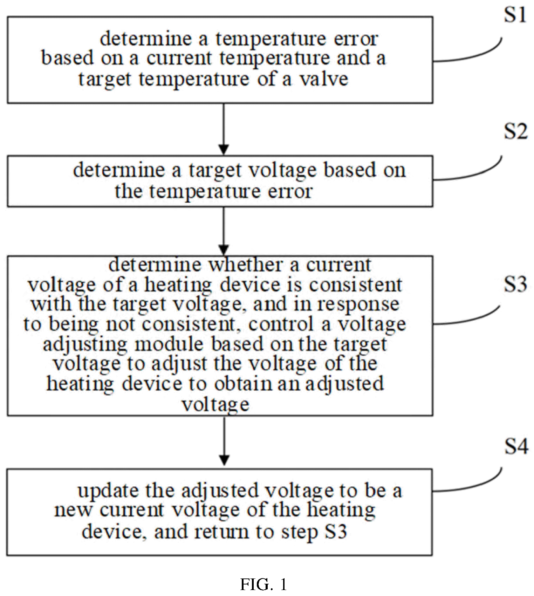

The reference numerals in FIG. 1 to FIG. 5 are as follows:
100-temperature sensor; 101-thermocouple; 110-first temperature sensor; 120-second temperature sensor; 130-third temperature sensor; 200-valve; 300-heating rod.

### DETAIL DESCRIPTION OF EMBODIMENTS

In order to enable those of ordinary skill in the art to better understand the technical solutions of the present disclosure, a temperature control method and a temperature control system for a valve provided in the present disclosure are described in detail below with reference to the drawings.

As shown in FIG. 1, a temperature control method for a valve provided in the present disclosure includes the following steps S1 to S4.

At S1, a temperature error is determined based on a current temperature and a target temperature of a valve.

A temperature of the valve may be measured with a temperature sensor. The valve may be provided with one temperature measurement point or two or more temperature measurement points. When the number of temperature measurement points is two or more, a geometric mean or an arithmetic mean of current temperatures measured at all the temperature measurement points, or a temperature obtained by processing the current temperatures measured at all the temperature measurement points with other methods may be taken as the current temperature of the valve. The target temperature may be set by a user or may be acquired with other methods based on user needs, which is not limited herein. The temperature error may be an absolute value of a difference between the current temperature and the target temperature.

At S2, a target voltage is determined based on the temperature error.

In an implementation of the present disclosure, a first proportional-integral-derivative model is adopted to determine the target voltage based on the temperature error. Exemplarily, the temperature error may be used as an input of the first proportional-integral-derivative model, and the target voltage is an output of the first proportional-integral-derivative model. Certainly, the user may adopt other methods to determine the target voltage. For example, a Model Predictive Control (MPC) algorithm may be adopted to determine the target voltage, which is not limited herein.

At S3, it is determined whether a current voltage of a heating device is consistent with the target voltage; if the current voltage of the heating device is not consistent with the target voltage, a voltage adjusting module is controlled based on the target voltage to adjust the voltage of the heating device to obtain an adjusted voltage.

The current voltage of the heating device may be acquired with an analog-to-digital converter and the like. The voltage adjusting module may be configured to adjust the voltage of the heating device to bring the voltage of the heating device close to the target voltage, thereby changing a power of the heating device, and bringing the temperature of the valve close to the target temperature. However, due to limitation of control accuracy, the voltage of the heating device often deviates from the target voltage to some extent.

At S4, the adjusted voltage is updated to be a new current voltage of the heating device, and the method returns to step S3.

After the voltage of the heating device is adjusted with the voltage adjusting module, the heating device may be subjected to voltage acquisition again, an acquired voltage serves as the adjusted voltage, and the adjusted voltage is updated to be the new current voltage of the heating device. The method then returns to step S3 to compare the new current voltage with the target voltage, thereby achieving closed-loop control of the voltage.

In the temperature control method for a valve provided in the embodiments of the present disclosure, by controlling the voltage adjusting module based on the temperature error between the current temperature and the target temperature to adjust the voltage of the heating device, the voltage of the heating device may be brought close to the target voltage, and the temperature of the valve may be further brought close to the target temperature, thereby achieving closed-loop control of the temperature of the valve. After the voltage adjusting module is controlled to adjust the voltage of the heating device, the adjusted voltage may be updated to be the new current voltage of the heating device, and it is determined again whether the new current voltage is consistent with the target voltage, thereby achieving the closed-loop control of the voltage of the heating device. The temperature control method provided in the present disclosure adds voltage closed-loop control based on temperature closed-loop control, and the dual closed-loop control method can improve response time and smoothness of a temperature curve, enable a quick and accurate response in the presence of temperature change, and avoid overshoot caused by integral windup, so that the heating device can be controlled accurately, and temperature control accuracy can be further improved.

In some embodiments, step S2, that is, determining the target voltage based on the temperature error, further includes:
determining the target voltage based on the temperature error by using a first proportional-integral-derivative model.

A proportional term of the first proportional-integral-derivative model includes the temperature error, an integral term includes a historical error, and a derivative term includes a time rate of change of the temperature error.

In some embodiments, the first proportional-integral-derivative model is as follows: $u \left(t\right) = {K}_{P} \left(err\left(t\right)+\frac{1}{{K}_{I}}\int err \left(t\right) dt + \frac{{K}_{D} derr \left(t\right)}{dt}\right)$ where u(t) is the target voltage, Kₚ is a proportional gain, Kᵣ is an integral gain, K_{D} is a derivative gain, and err(t) is the temperature error.

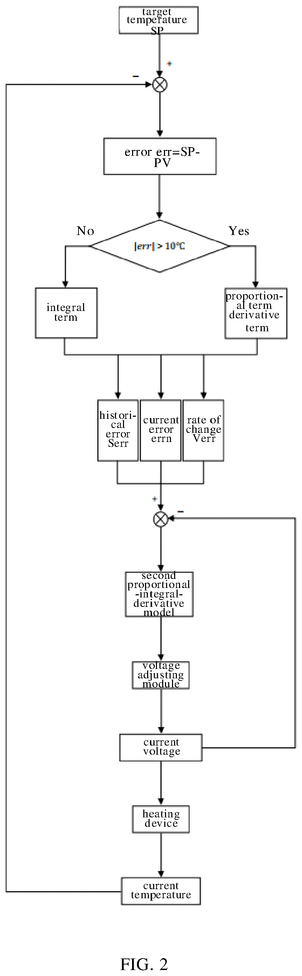

As shown in FIG. 2, in some embodiments, step S1 includes:
S11, receiving a set target temperature SP; and
S12, after receiving the set target temperature SP, calculating a current temperature error errₙ=target temperature SP-current temperature PVₙ, with n being a temperature of an n^{th} temperature measurement point, n=1, 2, ..., N, and N being the number of temperature measurement points. In the first proportional-integral-derivative model adopted in the temperature control method provided in the present disclosure, the proportional term is K_{P}×errₙ, the historical error is ${S}_{err} = {\sum }_{n = 1}^{n} {err}_{n}$, and the integral term is $\frac{1}{{K}_{I}} \times {S}_{err}$, the time rate of change of the temperature error is ${V}_{err} = \frac{{derr}_{n}}{dt}$, and the derivative term is K_{D}×Vₑᵣᵣ.

In some embodiments, at step S3, controlling the voltage adjusting module based on the target voltage to adjust the voltage of the heating device to obtain the adjusted voltage includes the following steps S31 and S32.

At S31, a voltage adjustment parameter is determined based on the target voltage by using a second proportional-integral-derivative model.

The second proportional-integral-derivative model takes the target voltage as an input and outputs the voltage adjustment parameter, so that the corresponding voltage adjustment parameter may be obtained based on the target voltage by using the second proportional-integral-derivative model. Certainly, an integral term, a proportional term, and a derivative term of the second proportional-integral-derivative model may be set based on user needs, which is not limited herein.

At S32, the voltage adjusting module is controlled based on the voltage adjustment parameter to adjust the voltage of the heating device to obtain the adjusted voltage.

In an embodiment, at step S32, the voltage adjustment parameter is input to the voltage adjusting module, so that the voltage adjusting module may adjust the voltage of the heating device based on the voltage adjustment parameter to the target voltage.

In some embodiments, step S4 includes:
S41, updating the adjusted voltage to be the new current voltage of the heating device, and returning to step S31;
S42, providing the new current voltage of the heating device; and
S43, acquiring a new current temperature.

In some embodiments, the voltage adjusting module includes a thyristor voltage regulator. The thyristor voltage regulator is a power-supply power control device based on a thyristor, which is a power electronic device, and may be referred to as a thyristor for short herein, and has the advantages of high efficiency, no mechanical noise and wear, high response speed, small volume, and light weight.

On this basis, in some embodiments, the voltage adjustment parameter is, for example, a duty cycle of a control signal for the thyristor. At step S31, the duty cycle of the control signal is determined based on the target voltage by using the second proportional-integral-derivative model; and at step S32, the control signal is output to the thyristor to adjust a voltage output by the thyristor to the heating device to the target voltage.

The voltage output by the thyristor to the heating device may be changed by changing the duty cycle of the control signal input to the thyristor. Certainly, the user may adopt other voltage adjusting modules, and adopt corresponding control methods based on the voltage adjusting modules, which is not limited herein.

In some embodiments, temperature control may be performed by a voltage loop in the presence of Electromagnetic Compatibility (EMC) electromagnetic interference or voltage disturbance. In this way, a calculation amount of a controller is the minimum, a dynamic response is the fastest, and single-loop integral windup is avoided. Based on the fact that a variation trend of the temperature error err is consistent with that of the voltage, the dual closed-loop control method adopted by the present disclosure includes an outer temperature loop and an inner voltage loop, an output of the outer temperature loop is used as an input of the inner voltage loop, and the inner voltage loop needs to be used in the outer temperature loop control. Whether the EMC electromagnetic interference or voltage disturbance exists may be determined by monitoring a waveform of the voltage, and frequency or amplitude of the voltage changes when the disturbance occurs. If the current temperature is equal to the target temperature, the voltage may be adjusted only by the voltage loop when the voltage fluctuates.

In the present embodiment, the proportional term is configured to control a system response time, the derivative term is configured to eliminate a system steady-state error, and the derivative term is configured to adjust an overshoot and a dynamic error. The integral term, the proportional term, and the derivative term change smoothness and response time of a system response curve together, and temperature control requirements can be met by adjusting parameters.

In some embodiments, step S2, that is, determining the target voltage based on the temperature error, further includes:
S21, determining an adjustment parameter corresponding to an error range to which the temperature error belongs, with the adjustment parameter including at least one of a proportional gain, an integral gain, or a derivative gain;
S22, updating the first proportional-integral-derivative model based on the adjustment parameter; and
S23, determining the target voltage corresponding to the error range based on the temperature error and the updated first proportional-integral-derivative model.

According to the temperature control method provided in the embodiments of the present disclosure, a plurality of error ranges may be set, that is, temperature errors are divided into a plurality of intervals, and each error range corresponds to a different adjustment parameter. After the error range to which the temperature error belongs is determined, the corresponding adjustment parameter may be determined. Then the first proportional-integral-derivative model is updated based on the adjustment parameter to change at least one of the proportional gain, the integral gain, or the derivative gain of the first proportional-integral-derivative model. The target voltage corresponding to the error range may be obtained after inputting the temperature error err to the updated first proportional-integral-derivative model. Thus, based on the error range to which the temperature error belongs, the target voltage can be determined by using the first proportional-integral-derivative model corresponding the error range, that is, segmented temperature control can be realized to meet requirements of overshoot and adjustment time.

In some embodiments, two error ranges, i.e., a first error range and a second error range, are provided, and each temperature error belonging to the second error range is greater than the temperature errors belonging to the first error range. In this case, step S21, that is, determining the adjustment parameter corresponding to the error range to which the temperature error belongs includes:
S211, in a case where the temperature error belongs to the second error range, determining that the adjustment parameter includes the proportional gain and the derivative gain; and
S212, in a case where the temperature error belongs to the first error range, determining that the adjustment parameter includes the integral gain.

In an implementation of the present disclosure, as shown in FIG. 2, two error ranges |err| are provided and are the first error range and the second error range, the first error range is less than or equal to 10°C, and the second temperature error range is greater than 10°C. When the temperature error err is greater than 10°C, that is, the temperature error err belongs to the second temperature error range, the temperature control method realizes rapid temperature adjustment by changing the proportional gain K_{P} and the derivative gain K_{D} of the first proportional-integral-derivative model to restore the temperature to be less than an error threshold. That is, the adjustment parameter corresponding to the second error range in which the temperature error err is greater than 10°C includes the proportional gain K_{P} and the derivative gain K_{D}. When the temperature error err is less than or equal to 10°C, that is, the temperature error err belongs to the first temperature error range, the temperature is accurately adjusted by changing the integral gain K_{I} of the first proportional-integral-derivative model, which can improve the smoothness of the temperature curve and adjustment accuracy. That is, the adjustment parameter corresponding to the first error range in which the temperature error err is less than or equal to 10°C includes the integral gain K_{I}. Certainly, the user may set the number and magnitudes of error ranges as needed, which is not limited herein.

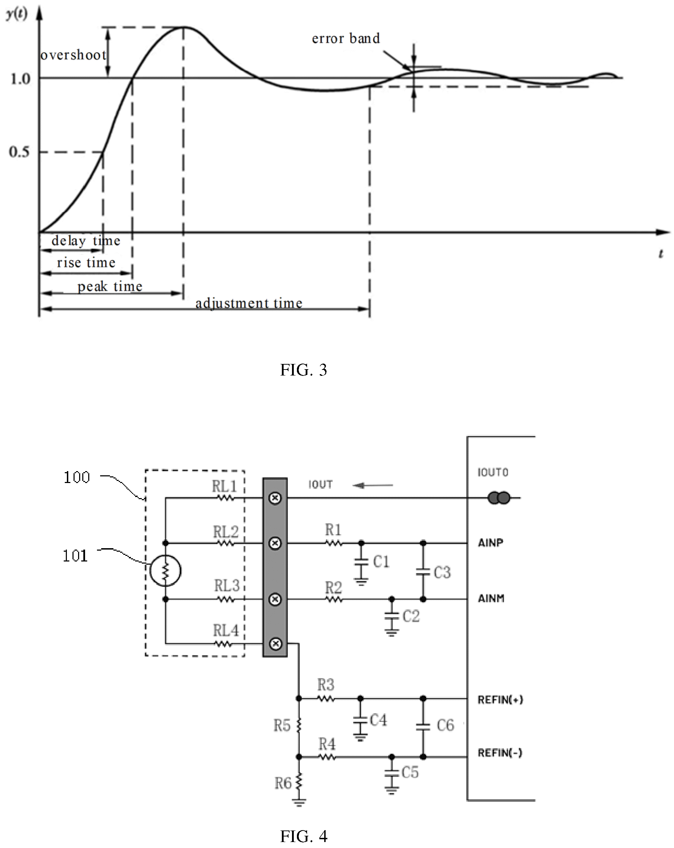

Further, for the temperature errors belonging to different error ranges, different adjustment parameters are used for the first proportional-integral-derivative model, that is, different adjustment modes are adopted for the temperature errors belonging to the different error ranges. As shown in FIG. 2, when the temperature error is relatively large (for example, greater than 10°C), the adjustment mode corresponding to the error range to which the temperature error belongs is to perform rapid adjustment through the proportional term and the derivative term; when the temperature error is relatively small (for example, less than or equal to 10°C), the adjustment mode corresponding to the error range to which the temperature error belongs is to perform accurate adjustment through the integral term. Thus, not only can a response speed be improved, but control accuracy can also be ensured. Taking two groups of temperature errors err as an example, the first group (including 10°C, 15°C, 25°C, 50°C, 75°C, and 100°C) belongs to the error range of |err|>10°C, the second group (including 1°C, 2°C, 5°C, and 9°C) belongs to the error range of |err|≤10°C, and calibration fitting is respectively performed on the two groups of temperature errors err to obtain curves which correspond to the two groups of temperature errors err and illustrate a corresponding relationship between the temperature error and the temperature, so as to meet the requirements of controlling an adjustment time to be within 5 minutes and an overshoot of a temperature response curve to be less than 0.5% within a full range of the temperature errors (|err|≤10°C and |err|> 10°C). FIG. 3 is a schematic diagram illustrating an adjustment process, the horizontal axis in FIG. 3 represents time t taken for adjustment, the vertical axis in FIG. 3 represents a final value ratio y(t) which changes with the time t taken for adjustment, and the final value ratio y(t) may be expressed as a percentage. In FIG. 3, a delay time is the time taken for reaching 50% of a final value for the first time, a rise time is the time taken for reaching the final value from 0 for the first time, a peak time is the time taken for reaching a first peak exceeding the final value, an adjustment time is the minimum time for maintaining a response within an error band of ±5% (or ±3%) of the final value, and an overshoot is a percentage by which the peak exceeds the final value.

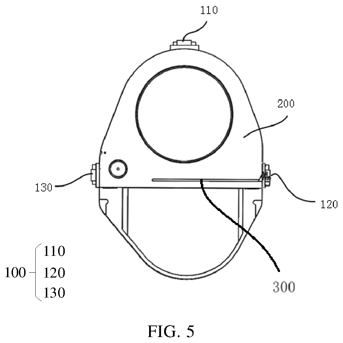

In some embodiments, as shown in FIG. 5, a valve 200 is provided with a heating rod 300 and a temperature sensor 100. The temperature sensor 100 includes a first temperature sensor 110, a second temperature sensor 120, and a third temperature sensor 130, the first temperature sensor 110, the second temperature sensor 120, and the third temperature sensor 130 are disposed around a valve port of the valve 200 on an outer surface of the valve 200, the second temperature sensor 120 and the third temperature sensor 130 correspond to two ends of the heating rod 300 respectively, and the first temperature sensor 110 is located on a side of the valve port away from the heating rod 300. Certainly, the user may set the number and positions of heating rods and the number and positions of temperature sensors as needed, which is not limited herein.

On this basis, before step S1, that is, determining the temperature error based on the current temperature and the target temperature of the valve 200, the temperature control method further includes:
acquiring a measured temperature of the first temperature sensor 110, a measured temperature of the second temperature sensor 120, and a measured temperature of the third temperature sensor 130; and
taking an average of the measured temperature of the second temperature sensor 120 and the measured temperature of the third temperature sensor 130 as a first average temperature; and taking an average of the measured temperature of the first temperature sensor 110 and the first average temperature as the current temperature.

Since the first temperature sensor 110 and the second temperature sensor 120 are closer to the heating rod 300, the temperatures measured by the two temperature sensors are more accurate, and the first average temperature is closer to the temperature of the heating rod 300. The third temperature sensor 130 is farther from the heating rod 300, so that a temperature sensor with higher precision may be used for improving temperature measurement accuracy. The temperature of the valve 200 can be accurately described by taking the average of the measured temperature of the first temperature sensor 110 and the first average temperature as the current temperature.

In some embodiments, a rate of temperature change over time may be further obtained based on a mean temperature (i.e., the average of the measured temperature of the first temperature sensor 110 and the first average temperature) by a heat conduction equation. When the current temperature reaches the set temperature, the variation trend of the temperature can be quickly determined based on the rate of temperature change over time, so as to predict a change of the temperature. A heat conduction equation in a three-dimensional isotropic medium is: $\frac{\partial u}{\partial t} = div \left(Uu\right) = k \left(\frac{{\partial }^{2} u}{\partial {x}^{2}}+\frac{{\partial }^{2} u}{\partial {y}^{2}}+\frac{{\partial }^{2} u}{\partial {z}^{2}}\right) = k \left({u}_{xx}+{u}_{yy}+{u}_{zz}\right)$ where u is a temperature function of a point in space, t is time, x, y, z are three coordinate axes in space respectively, and k is thermal diffusivity which depends on thermal conductivity of a material.

In the present embodiment, the valve is provided with at least three temperature measurement points, and the current temperature is determined based on the average temperature of the temperature measurement points, which improves the temperature measurement accuracy.

The present disclosure further provides a temperature control system, including a temperature sensor 100, a heating device, and a control device, the temperature sensor 100 is configured to measure a current temperature of a valve, the temperature sensor 100 and the heating device are both electrically connected to the control device, and the control device adopts the temperature control method described in any of the above embodiments to control the heating device to adjust a temperature of the valve.

In some embodiments, as shown in FIG. 4, the temperature sensor 100 includes a thermocouple 101 and four connection terminals. The four connection terminals are formed, for example, by four wires, and internal resistances of the four wires are RL1, RL2, RL3, and RL4, respectively. A first connection terminal (formed by the wire having the internal resistance RL1) and a second connection terminal (formed by the wire having the internal resistance RL2) in the four connection terminals are connected to one end of the thermocouple 101, and a third connection terminal (formed by the wire having the internal resistance RL3) and a fourth connection terminal (formed by the wire having the internal resistance RL4) in the four connection terminals are connected to the other end of the thermocouple 101. The first connection terminal is configured to be connected to current source IOUT0 which outputs current IOUT, the second connection terminal and the third connection terminal are configured to be connected to two ends of a voltage measuring mechanism respectively, and the fourth connection terminal is grounded. After flowing through the thermocouple 101, the current flows from the first connection terminal to the fourth connection terminal, and the second connection terminal and the third connection terminal may measure a voltage across the two ends of the thermocouple 101, thereby determining a temperature at a measurement point. With the temperature sensor 100 adopting a four-wire connection method, the voltage applied to the thermocouple 101 can be isolated from a current loop, an influence of the internal resistances of the wires in the current loop is eliminated, and measurement accuracy is improved.

In some embodiments, the second connection terminal and the third connection terminal are connected to two signal channels (AINP, AINM) of the voltage measuring mechanism respectively, and the two signal channels (AINP, AINM) are used for acquisition of voltage signals from the two ends of the thermocouple 101. The voltage signals from the two ends of the thermocouple 101 are a pair of common-mode signals, and the voltage measuring mechanism may convert one of the voltage signals to form a pair of fully differential signals from the pair of common-mode signals. Then, the voltage measuring mechanism measures the voltage on the thermocouple 101 through the fully differential signals, which can eliminate the internal resistances of the wires in a voltage measurement loop, and improve the measurement accuracy. As shown in FIG. 4, a third filter capacitor C3 is further disposed between the second connection terminal and the third connection terminal for filtering out differential-mode signals, so as to further improve the measurement accuracy. A capacitance of the third filter capacitor C3 may be 0.1 µF. Certainly, the user may set the capacitance of the third filter capacitor C3 as needed, which is not limited herein.

In some embodiments, as shown in FIG. 4, the second connection terminal is connected to a first filter resistor R1 and a first filter capacitor C1, a first terminal of the first filter resistor R1 is connected to the second connection terminal, a second terminal of the first filter resistor R1 is connected to a first terminal of the first filter capacitor C1, and a second terminal of the first filter capacitor C1 is grounded. The first filter resistor R1 and the first filter capacitor C1 form low-pass filtering, thereby effectively avoiding interference caused by high-frequency alternating current signals. Further, in some embodiments, a resistance of the first filter resistor R1 is 1 KΩ, and a capacitance of the first filter capacitor C1 is 0.01 µF. Certainly, the user may set the resistance of first filter resistor R1 and the capacitance of the first filter capacitor C1 as needed, which is not limited herein.

In some embodiments, the third connection terminal is connected to a second filter resistor R2 and a second filter capacitor C2. As shown in FIG. 4, a first terminal of the second filter resistor R2 is connected to the third connection terminal, a second terminal of the second filter resistor R2 is connected to a first terminal of the second filter capacitor C2, and a second terminal of the second filter capacitor C2 is grounded. The second filter resistor R2 and the second filter capacitor C2 form low-pass filtering, thereby effectively avoiding the interference caused by the high-frequency alternating current signals. Further, in some embodiments, a resistance of the second filter resistor R2 is 1 KΩ, and a capacitance of the second filter capacitor C2 is 0.01 µF. Certainly, the user may set the resistance of the second filter resistor R2 and the capacitance of the second filter capacitor C2 as needed, which is not limited herein.

In some embodiments, the fourth connection terminal of the temperature sensor 100 is further connected to a calibration module, which includes a first calibration resistor R5 and a second calibration resistor R6 connected in series between the fourth connection terminal of the temperature sensor 100 and the ground. The calibration module further includes a first calibration channel REFIN(+) and a second calibration channel REFIN(-), the first calibration channel REFIN(+) is connected between the first calibration resistor R5 and the fourth connection terminal of the temperature sensor 100, and the second calibration channel REFIN(-) is connected between the first calibration resistor R5 and the second calibration resistor R6. The first calibration channel REFIN(+) and the second calibration channel REFIN(-) may be configured to measure whether a resistance of the thermocouple 101 is accurate, thereby determining whether the temperature sensor 100 is accurate.

In some embodiments, a sixth filter capacitor C6 is disposed between the first calibration channel REFIN(+) and the second calibration channel REFIN(-), and the sixth filter capacitor C6 may be configured to filter differential-mode signals, so as to further improve the measurement accuracy. A capacitance of the sixth filter capacitor C6 may be 0.1 µF. Certainly, a user may set the capacitance of the sixth filter capacitor C6 as needed, which is not limited herein.

In some embodiments, a third filter resistor R3 is disposed between the fourth connection terminal of the temperature sensor 100 and the first calibration channel REFIN(+). As shown in FIG. 4, a first terminal of the third filter resistor R3 is connected to the third connection terminal, a second terminal of the third filter resistor R3 is connected to a first terminal of a fourth filter capacitor C4, and a second terminal of the fourth filter capacitor C4 is grounded. The third filter resistor R3 and the fourth filter capacitor C4 form low-pass filtering, thereby effectively avoiding the interference caused by the high-frequency alternating current signals. In some embodiments, a resistance of the third filter resistor R3 is 1 KΩ, and a capacitance of the fourth filter capacitor C4 is 0.01 µF. Certainly, the user may set the resistance of the third filter resistor R3 and the capacitance of the fourth filter capacitor C4 as needed, which is not limited herein.

In some embodiments, a fourth filter resistor R4 is disposed between a second terminal of the first calibration resistor R5 and the second calibration channel REFIN(-). As shown in FIG. 4, a first terminal of the fourth filter resistor R4 is connected to the third connection terminal, a second terminal of the fourth filter resistor R4 is connected to a first terminal of a fifth filter capacitor C5, and a second terminal of the fifth filter capacitor C5 is grounded. The fourth filter resistor R4 and the fifth filter capacitor C5 form low-pass filtering, thereby effectively avoiding the interference caused by the high-frequency alternating current signals. Further, in some embodiments, a resistance of the fourth filter resistor R4 is 1 KΩ, and a capacitance of the fifth filter capacitor C5 is 0.01 µF. Certainly, the user may set the resistance of the fourth filter resistor R4 and the capacitance of the fifth filter capacitor C5 as needed, which is not limited herein.

In some embodiments, the number of temperature sensors 100 is at least three, and each temperature sensor 100 is disposed on an outer sidewall of the valve and evenly distributed around the valve.

In an implementation illustrated by FIG. 5, the number of temperature sensors 100 is three, and the three temperature sensors are the first temperature sensor 110, the second temperature sensor 120, and the third temperature sensor 130 respectively. The first temperature sensor 110 is farther from the heating rod, and has a relatively large wire resistance; therefore, a PT1000 thermocouple 101 may be selected as the first temperature sensor 110, and PT100 thermocouples 101 may be selected as the second temperature sensor 120 and the third temperature sensor 130. By using the PT1000 thermocouple and the PT100 thermocouples together, temperature control identification precision can be improved to ±0.01°C from ±1°C-±2°C, and a temperature measurement error can be reduced, so that a change of a cavity temperature of the valve can be accurately reflected in real time, an influence of the temperature error on a terminal manufacturing process can be reduced, and liquefaction and deposition of a process gas can be prevented. In addition, a temperature measuring probe of the temperature sensor 100 may be made of a shock-resistant and corrosion-resistant material, so as to prolong service life of the temperature sensor 100.

In addition, when a temperature t≤0°C, a calculation formula for a resistance R of the temperature sensor 100 is: $R \left(t\right) = {R}_{0} \times \left[1+At+{Bt}^{2}+C\left(t-100\right){t}^{3}\right]$

When the temperature t≥0°C, a calculation formula for the resistance R of the temperature sensor 100 is: $R \left(t\right) = {R}_{0} \times \left(1+At+{Bt}^{2}\right)$ where t is the temperature of the temperature sensor 100; R(t) is the resistance of the temperature sensor 100 at the temperature t; R₀ is the resistance of the temperature sensor 100 at 0°C; for the PT100 thermocouple, R₀=100 Ω; for the PT1000 thermocouple, R₀=1000 Ω; A=3.9083×10⁻³; B=-5.775×10⁻⁷; and C=-4.183×10⁻¹². Under an operating condition, the temperature sensor 100 adopts the four-wire connection method, the resistance R of the temperature sensor 100 may be calculated based on a detected voltage and a detected current, the resistance R of the temperature sensor 100 obtained by a calculation based on the detected voltage and the detected current is compared with the resistance R of the temperature sensor 100 obtained by a calculation by the above calculation formula for the resistance R of the temperature sensor 100, if the two resistances deviate from each other greatly, it is determined that there is problem with the resistance R of the temperature sensor 100, and maintenance of the temperature sensor 100 needs to be performed.

It should be understood that the above implementations are just exemplary implementations adopted to illustrate the principle of the present disclosure, and the present disclosure is not limited thereto. Various modifications and improvements can be made by those of ordinary sill in the art without departing from the spirit and essence of the present disclosure, and those modifications and improvements are also considered to fall within the scope of the present disclosure.

## Claims

1. A temperature control method for a valve, comprising:
determining a temperature error based on a current temperature and a target temperature of a valve;
determining a target voltage based on the temperature error;
determining whether a current voltage of a heating device is consistent with the target voltage, and in response to the current voltage of the heating device being not consistent with the target voltage, controlling a voltage adjusting module based on the target voltage to adjust the voltage of the heating device to obtain an adjusted voltage; and
updating the adjusted voltage to be a new current voltage of the heating device, and returning to the operation of determining whether the current voltage of the heating device is consistent with the target voltage.

2. The temperature control method of claim 1, wherein determining the target voltage based on the temperature error comprises:
determining the target voltage based on the temperature error by using a first proportional-integral-derivative model; and/or
controlling the voltage adjusting module based on the target voltage to adjust the voltage of the heating device to obtain the adjusted voltage comprises:
determining a voltage adjustment parameter based on the target voltage by using a second proportional-integral-derivative model; and
controlling the voltage adjusting module based on the voltage adjustment parameter to adjust the voltage of the heating device to obtain the adjusted voltage.

3. The temperature control method of claim 2, wherein determining the target voltage based on the temperature error further comprises:
determining an adjustment parameter corresponding to an error range to which the temperature error belongs, the adjustment parameter comprising at least one of a proportional gain, an integral gain, or a derivative gain;
updating the first proportional-integral-derivative model based on the adjustment parameter; and
determining the target voltage corresponding to the error range based on the temperature error and the updated first proportional-integral-derivative model.

4. The temperature control method of claim 3, wherein two error ranges are provided and are a first error range and a second error range, and each temperature error belonging to the second error range is greater than temperature errors belonging to the first error range; and
determining the adjustment parameter corresponding to the error range to which the temperature error belongs comprises:
in a case where the temperature error belongs to the second error range, determining that the adjustment parameter comprises the proportional gain and the derivative gain; and
in a case where the temperature error belongs to the first error range, determining that the adjustment parameter comprises the integral gain.

5. The temperature control method of claim 2, wherein the voltage adjusting module comprises a thyristor, and the voltage adjustment parameter is a duty cycle of a control signal for the thyristor.

6. The temperature control method of any one of claims 1 to 5, wherein the valve is provided with a heating rod and a temperature sensor, the temperature sensor comprises a first temperature sensor, a second temperature sensor, and a third temperature sensor, the first temperature sensor, the second temperature sensor, and the third temperature sensor are disposed around a valve port of the valve on an outer surface of the valve, the second temperature sensor and the third temperature sensor correspond to two ends of the heating rod respectively, and the first temperature sensor is located on a side of the valve port away from the heating rod; and
before determining the temperature error based on the current temperature and the target temperature of the valve, the temperature control method further comprises:
acquiring a measured temperature of the first temperature sensor, a measured temperature of the second temperature sensor, and a measured temperature of the third temperature sensor;
taking an average of the measured temperature of the second temperature sensor and the measured temperature of the third temperature sensor as a first average temperature; and
taking an average of the measured temperature of the first temperature sensor and the first average temperature as the current temperature.

7. A temperature control system, comprising a temperature sensor, a heating device, and a control device, wherein the temperature sensor is configured to measure a current temperature of a valve, the temperature sensor and the heating device are both electrically connected to the control device, and the control device adopts the temperature control method of any one of claims 1 to 6 to control the heating device to adjust a temperature of the valve.

8. The temperature control system of claim 7, wherein the heating device is a heating rod, the temperature sensor comprises a first temperature sensor, a second temperature sensor, and a third temperature sensor, the temperature sensor is disposed around a valve port of the valve on an outer surface of the valve, the second temperature sensor and the third temperature sensor correspond to two ends of the heating rod respectively, and the first temperature sensor is located on a side of the valve port away from the heating rod.

9. The temperature control system of claim 7, wherein the temperature sensor comprises a thermocouple and four connection terminals, wherein a first connection terminal and a second connection terminal in the four connection terminals are connected to one end of the thermocouple, a third connection terminal and a fourth connection terminal in the four connection terminals are connected to the other end of the thermocouple, the first connection terminal is configured to be connected to a current source, the second connection terminal and the third connection terminal are configured to be connected to two ends of a voltage measuring mechanism respectively, and the fourth connection terminal is grounded.

10. The temperature control system of claim 9, wherein the second connection terminal is connected to a first filter resistor and a first filter capacitor, a first terminal of the first filter resistor is connected to the second connection terminal, a second terminal of the first filter resistor is connected to a first terminal of the first filter capacitor, and a second terminal of the first filter capacitor is grounded, and/or
the third connection terminal is connected to a second filter resistor and a second filter capacitor, a first terminal of the second filter resistor is connected to the third connection terminal, a second terminal of the second filter resistor is connected to a first terminal of the second filter capacitor, and a second terminal of the second filter capacitor is grounded.

11. The temperature control system of claim 9, wherein a third filter capacitor is further disposed between the second connection terminal and the third connection terminal for filtering out differential-mode signals between the second connection terminal and the third connection terminal.
